# EUROPEAN PATENT APPLICATION

(11) **EP 3 466 274 A2**
(43) Date of publication of application: **10.04.2019**
(21) Application number: 17803123.3
(22) Date of filing: 26.05.2017
(51) Int. Cl.: A23L 23/00, A23L 3/00, A23L 3/3463, A23L 3/3508

(54) **METHOD FOR PREPARING PROCESSED FOOD USING SEPARATED PACKAGING AND MILD HEAT STERILIZATION**

(30) Priority: 26.05.2016 KR 20160065030
(71) Applicant: Cj Cheiljedang Corporation, Seoul 04560 (KR)
(72) Inventor: CHO, Won Il, Seoul 08018 (KR); LEE, Nam Ju, Seoul 06592 (KR); KANG, Dae Ik, Goyang-si Gyeonggi-do 10387 (KR); KIM, Tae Hyeong, Suwon-si Gyeonggi-do 16325 (KR); SHIN, Sang Myung, Seoul 08089 (KR); LEE, Jong Il, Seoul 08324 (KR); CHUNG, Min Ju, Seocho-gu Seoul 06696 (KR); CHOI, Su Hee, Suwon-si Gyeonggi-do 16507 (KR); KIM, Seung Chul, Hwaseong-si Gyeonggi-do 13835 (KR)
(74) Representative: Weickmann & Weickmann PartmbB
(86) International application number: PCT/KR2017/005558
(87) International publication number: WO 2017/204605

(57) **Abstract**

The present application relates to a processed food distributable at room temperature comprising (a) a first food part comprising a paste, a leafy vegetable, or a combination thereof; and (b) a second food part comprising at least one selected from the group consisting of a meat, a seaweed, a seafood, a root vegetable, a fruit vegetable, and a mushroom, wherein the first and second food parts are separately packaged.

## Description

### [Technical Field]

The present application relates to a method for manufacturing a processed food using separate packaging and mild heating sterilization.

### [Background Art]

Processed foods distributable at room temperature require adequate sterilization (e.g., retort sterilization involving 15 to 30 minutes of heating under the conditions of 121°C and 2.1 kgf/cm²) during manufacturing as they are exposed to room temperature during storage and circulation after manufacture until they are consumed. In particular, meats, seaweeds, seafood, or root vegetables have many microorganisms that are highly thermostable, and thus require retort sterilization.

In contrast, process foods containing pastes or leafy vegetables are accompanied a problem of remarkably low quality as the paste denatures during the retort sterilization, and the leafy vegetables, vulnerable to heat, soften.

Under such circumstances, the present inventors endeavored to develop a sterilization method facilitating room temperature distribution of processed foods including meats, seaweeds, seafoods, or root vegetables together with pastes or leafy vegetables while maintaining good sensory quality of the pastes and leafy vegetables, and as a result, found that microorganisms were removed through sterilization, which enables room temperature distribution, and the texture of the pastes and leafy vegetables could be maintained when the meats, seaweeds, seafoods, or root vegetables, and pastes or leafy vegetables were separated and heated at different temperature ranges, thereby completing the present application.

(Patent Document 1) JP 2010-057416 (March 18, 2010)

### [Disclosure]

### [Technical Problem]

An object of the present application is to provide a processed food distributable at room temperature comprising (a) a first food part comprising a paste, a leafy vegetable, or a combination thereof; and (b) a second food part comprising at least one selected from the group consisting of a meat, a seaweed, a seafood, a root vegetable, a fruit vegetable, and a mushroom, wherein the first and second food parts are separately packaged.

Another object of the present application is to provide a method for manufacturing a processed food distributable at room temperature.

Hereinafter, the present application will be described in more detail. The contents not described in this specification can be sufficiently recognized and inferred by those skilled in the technical field or a technical field similar to that of the present application, and thus, the description thereof will be omitted.

### [Technical Solution]

To achieve the objects of the present application, an aspect of the present application provides a processed food distributable at room temperature comprising (a) a first food part comprising a paste, a leafy vegetable, or a combination thereof; and (b) a second food part comprising at least one selected from the group consisting of a meat, a seaweed, a seafood, a root vegetable, a fruit vegetable, and a mushroom, wherein the first and second food parts are separately packaged.

As used herein, the term "paste" refers to a fermented food made by fermenting a bean or red pepper using a microorganism. According to an exemplary embodiment, the paste of the present application may be a red pepper paste ("Gochujang" in Korean) or soybean paste ("Doenjang" in Korean).

As used herein, the term "leafy vegetable" refers to a vegetable with a leaf. According to an exemplary embodiment, the leafy vegetable of the present application may be at least one selected from the group consisting of Korean cabbage, lettuce, spinach, and water parsley. According to another exemplary embodiment, the leafy vegetable of the present application may be Korean cabbage. According to another exemplary embodiment, the first food part of the present application may include kimchi.

Further, according to an exemplary embodiment, the present application may include at least one selected from the group consisting of a meat, a seafood, a root vegetable, a fruit vegetable, and a mushroom, together with a seaweed. Specifically, the second part may include at least one selected from the group consisting of a meat, a seafood, a root vegetable, and a mushroom, together with a seaweed and a fruit vegetable.

As used herein, the term "meat" refers to a type of meat of a food animal. According to an exemplary embodiment, the meat of the present application may be at least one selected from the group consisting of beef, cow bone, pork, pig bone, chicken, and chicken bone.

As used herein, the term "seaweed" means an alga from the ocean. According to an exemplary embodiment, the seaweed of the present application may be at least one selected from the group consisting of laver, sea mustard, kelp, green laver, and hizikia fusiforme.

As used herein, the term "seafood" means all types of organisms obtainable from the ocean. According to an exemplary embodiment, the seafood of the present application may be at least one selected from the group consisting of anchovy, clam, Manila clam, squid, small octopus, webfoot octopus, mussel, crab, shrimp, oceanic bonito, and freshwater snail.

As used herein, the term "root vegetable" means a vegetable whose root or subterranean stem is edible. According to an exemplary embodiment, the root vegetable of the present application may be at least one selected from the group consisting of garlic, ginger, onion, potato, radish, carrot, taro, and burdock.

As used herein, the term "fruit vegetable" means a vegetable whose fruit is edible. According to an exemplary embodiment, the fruit vegetable of the present application may be at least one selected from the group consisting of cucumber, pumpkin, red pepper, eggplant, bean, and corn. Specifically, the fruit vegetable of the present application may be at least one selected from the group consisting of pumpkin, red pepper, and tofu.

The paste, leafy vegetable, meat, seaweed, seafood, root vegetable, fruit vegetable, and mushroom of the present application include the originals themselves and an extract thereof, a dried product, a processed product, and a powder thereof, but are not limited thereto.

According to an exemplary embodiment, the processed foods of the present application may be soybean paste stew or kimchi stew. Specifically, when the processed food is kimchi stew, the kimchi stew may include calcium in the first food part. More specifically, the calcium of the present application may be calcium lactate, calcium chloride, eggshell calcium, shell calcium, or calcium oxide. Further, the calcium of the present application can be contained in the first food part in an amount of 0.1% (w/w) to 1.0% (w/w), 0.3% (w/w) to 0.8% (w/w), or 0.4% (w/w) to 0.6% (w/w) based on the weight of the first food part.

According to another exemplary embodiment, the first food part may further comprise an antibiotic agent. Specifically, the antibiotic agent may be at least one selected from the group consisting of nisin, polylysine, vitamin B1 dilaurylsulfate, and polyphenol. More specifically, the antibiotic agent of the present application may be contained in an amount of 0.01% (w/w) to 1.0% (w/w), 0.01% (w/w) to 0.5% (w/w), 0.01% (w/w) to 0.2% (w/w), 0.05% (w/w) to 1.0% (w/w), 0.05% (w/w) to 0.5% (w/w), or 0.05% (w/w) to 0.2% (w/w) based on the weight of the first food part.

According to another exemplary embodiment, the concentration of microorganisms in the processed food distributable at room temperature of the present application may be less than 10¹ CFU/g at 15°C, 25°C, 35°C, or 45°C 1 month, 2 months, 3 months, 4 months, 5 months, or 6 months after it is manufactured.

The processed food distributable at room temperature of the present application may contain various additional ingredients as other conventional processed foods. Specifically, starch syrup, flour, corn oil, soybean sauce, sugar, alpha rice flour, salt, yeast extract, flavor enhancer, coloring agent (*e.g.*, paprika extract coloring, caramel coloring), oleoresin capsicum, alcohol, and sodium carbonate may be included, but the food is not limited thereto.

As another aspect, the present application provides a method for manufacturing a processed food distributable at room temperature, comprising (a) heating a first food product comprising a paste, a leafy vegetable, or a combination thereof at a temperature between 80°C and 110°C; and (b) heating a second food product comprising water and at least one food selected from the group consisting of a meat, a seaweed, a seafood, a root vegetable, and a tofu at a temperature between 115°C and 123°C.

A more detailed preparation method is described as follows:
The present application employs (a) heating a first food product comprising a paste, a leafy vegetable, or a combination thereof at a temperature between 80°C and 110°C; and (b) heating a second food product comprising water and at least one food selected from the group consisting of a meat, a seaweed, a seafood, a root vegetable, and a tofu at a temperature between 115°C and 123°C consecutively, simultaneously, or in reverse order (*i.e.,* (a) after (b)). As it is performed at a temperature lower than that of the retort heating, (a) can be considered as mild heating (*i.e.,* heating under a mild condition).

According to an exemplary embodiment, the heating of (a) can be performed for 10 minutes to 60 minutes, 10 minutes to 50 minutes, 10 minutes to 40 minutes, 10 minutes to 30 minutes, 20 minutes to 60 minutes, 20 minutes to 50 minutes, 20 minutes to 40 minutes, or 20 minutes to 30 minutes.

According to another exemplary embodiment, the heating of (a) can be performed at 80°C to 105°C, 80°C to 100°C, 80°C to 95°C, 80°C to 90°C, 80°C to 85°C, 85°C to 110°C, 85°C to 105°C, 85°C to 100°C, 85°C to 95°C, 85°C to 90°C, 90°C to 110°C, 90°C to 105°C, 90°C to 100°C, 90°C to 95°C, 100°C to 110°C, 100°C to 105°C, or 105°C to 110°C.

According to another exemplary embodiment, the heating of (a) may further comprise (a-1) heating at a temperature between 80°C and 95°C; followed by (a-2) heating at a temperature between 100°C and 110°C. Specifically, the heating of (a-1) can be performed at 80°C to 95°C, 80°C to 90°C, 80°C to 85°C, 85°C to 95°C, 85°C to 90°C, or 90°C to 95°C, and the heating of (a-2) can be performed at 100°C to 110°C, 100°C to 105°C, or 105°C to 110°C. More specifically, the heating of (a-1) can be performed for 5 minutes to 20 minutes, 10 minutes to 20 minutes, 15 minutes to 20 minutes, 5 minutes to 15 minutes, 10 minutes to 15 minutes, or 5 minutes to 10 minutes, and the heating of (a-2) can be performed for 5 minutes to 30 minutes, 5 minutes to 20 minutes, 5 minutes to 15 minutes, 10 minutes to 30 minutes, 10 minutes to 20 minutes, 10 minutes to 15 minutes, 15 minutes to 30 minutes, 15 minutes to 20 minutes, or 20 minutes to 30 minutes.

According to an exemplary embodiment, the heating of (b) can be performed for 10 minutes to 60 minutes, 10 minutes to 50 minutes, 10 minutes to 40 minutes, 10 minutes to 30 minutes, 10 minutes to 20 minutes, 20 minutes to 60 minutes, 20 minutes to 50 minutes, 20 minutes to 40 minutes, 20 minutes to 30 minutes, 30 minutes to 60 minutes, 30 minutes to 50 minutes, 30 minutes to 40 minutes, 40 minutes to 60 minutes, or 40 minutes to 50 minutes. According to another exemplary embodiment, the heating of (b) can be performed at 115°C to 121.1°C, 120°C to 121.1°C, 121°C to 121.1°C, or 121°C.

According to another exemplary embodiment, the heating of (b) may further comprise (pre-b) heating at a temperature between 85°C and 95°C before the heating at a temperature between 115°C and 123°C. Specifically, (pre-b) can be performed at 85°C to 90°C or 90°C to 95°C. More specifically, the heating of (pre-b) can be performed for 10 minutes to 30 minutes or 15 minutes to 25 minutes.

According to another exemplary embodiment, the preparation method of the present application may further comprise (a-i) and (b-i) packaging the first and second food parts before or after (a) and (b), respectively.

According to another exemplary embodiment, the preparation method may further comprise (pre-a) adjusting pH, salinity, or a sugar content of the first food part to 3.9 to 4.5, 3% to 15%, or 20 Brix% to 60 Brix%, respectively, before (a).

Specifically, the adjustment of pH can be performed by adding an organic acid to the first food part. More specifically, the organic acid may be at least one selected from the group consisting of lactic acid, citric acid, acetic acid, malic acid, pectic acid, and succinic acid. Additionally, the pH of the first food part may be adjusted to pH 4.0 to pH 4.4, pH 4.1 to pH 4.4 or pH 4.2 to pH 4.4.

Further, the adjustment of salinity may be performed by adding sodium chloride to the first food part. Specifically, the salinity of the first part may be adjusted to 5% to 15%, 8% to 15%, 8% to 12%, or 9% to 11%.

In addition, the adjustment of sugar can be performed by adding a sugar to the first food part. Specifically, the sugars of the present application may be sugar, glucose, trehalose, fructose, or starch syrup.

As used herein, the first and second food parts, and the food products included in the food parts in terms of the preparation method are the same as those described in terms of the processed foods distributable at room temperature above. To avoid undue complexity of the specification, the descriptions thereof are omitted.

### [Advantageous Effects]

The present application is advantageous in that the food group which needs retort sterilization and that which needs heating at a temperature lower than that of the retort sterilization (mild sterilization) are separated and heated at different temperatures to minimize deterioration of flavor, fragrance, and texture of the original food that may be caused by retort sterilization of everything at once, so that a processed food distributable at room temperature having excellent sensory quality can be manufactured while effectively removing microorganisms through sterilization.

### [Brief Description of the Drawings]

Fig. 1 shows a picture of kimchi stew and soybean paste stew distributable at room temperature according to an exemplary embodiment.
Fig. 2 shows data of a retort heated meat stock pouch of the soybean paste stew according to an exemplary embodiment.
Fig. 3 shows the mechanical measurement of firmness of the texture of kimchi in kimchi stew distributable at room temperature according to an exemplary embodiment.

### [Mode for Invention]

Hereinbelow, preferred embodiments of the present application will be provided. However, the embodiments provided are only for illustrative purposes for better understanding of the present application and should not be construed as limiting the present application.

### <Examples>

### Preparation Example 1: Manufacture of processed foods (kimchi stew and soybean paste stew) distributable at room temperature

### (1) Preparation of ingredients

For kimchi stew, tofu, leek, and red pepper were sliced, and a meat broth was prepared by adding a beef leg bone broth, anchovy extract, kelp extract, modified food starch, maltodextrin, and purified salt to distilled water and then boiling. Kimchi including pickled cabbage, red pepper powder, white sugar, garlic, and leek was mixed with red pepper paste, corn oil, and purified salt to prepare a kimchi sauce including kimchi.

For soybean paste stew, potatoes, tofu, an onion, shiitake, king oyster mushroom, kelp extract, and purified salt were added to distilled water to prepare a broth. Soybean paste, clam extract, purified salt, kelp extract, and red pepper powder were mixed to prepare a soybean paste sauce.

### (2) Sterilization of broth

The broths prepared in (1) for kimchi stew and soybean paste stew were packaged in separate pouches and sealed to be retort heated.

Specifically, the broths include a large quantity of solids; thus, two-step retort heating comprising pre-heating at 95°C for 15 minutes and heat sterilization at 121°C for 15 minutes for a rapid temperature increase of the center part was employed.

### (3) Sterilization of sauce

As the kimchi sauce includes kimchi and red pepper paste, and the soybean paste sauce includes soybean paste, the retort sterilization was not performed for the sauces to prevent deterioration of flavor and texture; instead, considering pH, salinity, and sugar contents, heat sterilization was performed at a temperature lower than 121°C after mixing an organic acid, salt, and sugar.

Specifically, lactic acid was added to the kimchi sauce in an amount of 2.0% (w/w) based on the weight of the sauce to adjust pH to 4.3, and purified salt and sugar were added to the soybean paste sauce to adjust the salinity and sugar content to about 10% and 40 Brix%, respectively. Nisin, a commercial natural bacteriocin antibiotic agent, was added to the soybean paste sauce in an amount of 0.1% (w/w), and 0.5 % (w/w) of calcium lactate was added to the kimchi sauce to enhance the texture.

Each sauce was then packaged in a separate pouch and sealed, followed by heating the kimchi sauce at 105°C for 20 minutes and soybean paste sauce at 95°C for 20 minutes.

### (4) Manufacture of finished product

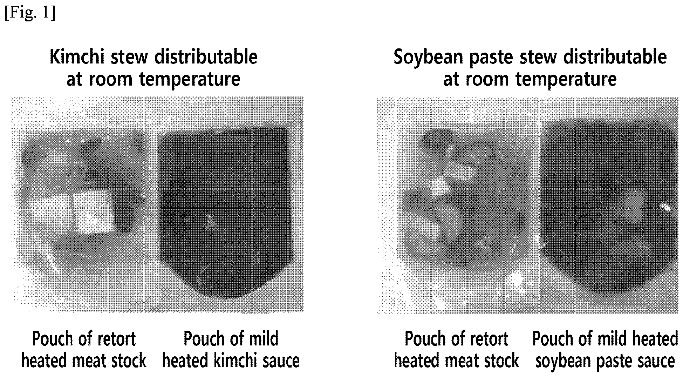

The finished products of kimchi stew and soybean paste stew distributable at room temperature provide the broth pouch prepared in (2) together with the sauce pouch prepared in (3) (Fig. 1).

### Experimental Example 1: Examination of the effect of sterilizing broths and sauces

The disinfection and sterilization effects of the broths and sauces prepared in (2) and (3) of Preparation Example 1 were observed to determine whether they can be distributable at room temperature. Commercially available kimchi stew and soybean paste stew were used as controls. The strength of heating sterilization (Fo) was measured using a wireless data logger, and the number of microorganisms was measured by a clone coefficient method after incubating at 37°C for 48 hours using a proper medium for each microorganism. The proper media used for the total microorganisms, thermostable microorganisms, and fungi (mold and yeast) were Plate Count Agar (PCA), Tryptic Soy Agar (TSA), and Potat dextrose Agar (PDA), respectively.

As a result, the total microorganisms, thermostable microorganisms, and fungi disappeared from the controls and the broths and kimchi sauce prepared in (2) and (3) of the Preparation Example as shown in the table below. In addition, no growth thereof was observed when stored for 6 months to 12 months at 10°C, 25°C, 35°C, and 45°C (cold, room temperature, and heat storage), indicating that the initial sterile condition was retained. The sauce concentrate for soybean paste stew did not reach its complete sterile status; however, the remaining microorganisms did not grow due to salinity and Brix, which demonstrates the feasibility of room temperature distribution. Additionally, compared to the soybean paste sauce prepared without adding nisin, that prepared in (3) of the Preparation Example showed a decrease in the microorganisms from 10¹ CFU/g to 10² CFU/g without having nisin added, thereby indicating that the microorganism stability was improved by the addition of nisin.

**[Table 1] Result of sterilization of broths and sauces**

| | Sterilization conditions | Total microorganisms (CFU/g) | | Thermostable microorganisms (CFU/g) | | Fungi (CFU/g) | |
|---|---|---|---|---|---|---|---|
| | | Pre-sterilization | Post -sterilization and 6 to 12 months after storage | Pre-sterilization | Post-sterilization and 6 to 12 months after storage | Pre-sterilization | Post-sterilization and 6 to 12 months after storage |
| Control (retort combined kimchi stew) | 121.1°C, 25 minute heat sterilization | 10⁴ | 0 | 10² | 0 | 10¹ | 0 |
| Preparational Example 1 (kimchi sauce) | pH adjustment (4.3) +heating sterilization at 105°C | 10³ | 0 | 10² | 0 | 10¹ | 0 |
| Preparational Example 1 (broth for kimchi stew) | 95°C→121°C Two-step heating sterilization | 10⁴ | 0 | 10² | 0 | 10¹ | 0 |
| Control (retort combined soybean paste stew) | 121.1°C, 30 minute heating sterilization | 10⁶ | 0 | 10⁶ | 0 | 10² | 0 |
| Preparational Example 1 (soybean paste sauce) | Adjustment of salinity and Brix+heating sterilization at 95°C | 10⁶ | 10²-10³ (Bacteriostatic) | 10⁴ | 10¹-10² (Bacteriostatic) | 10² | 0 |
| Preparational Example 1 (soybean paste sauce) | Adjustment of salinity and Brix+nisin +heating sterilization at 95°C | 10⁶ | 10¹∼10² (Bacteriostatic) | 10⁴ | 10¹∼10² (Bacteriostatic) | 10² | 0 |
| Preparational Example 1 (broth for soybean paste stew) | 95°C→121°C Two-step heating sterilization | 10⁴ | 0 | 10² | 0 | 10¹ | 0 |

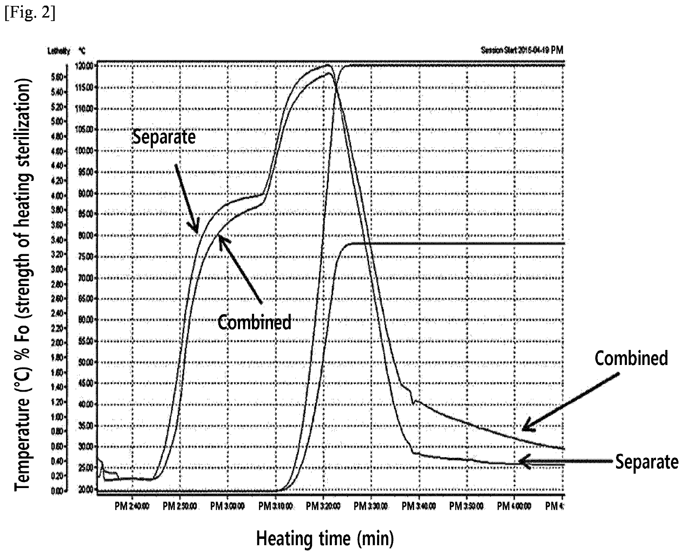

Further, the data for temperature and strength (Fo value) of retort heating sterilization were obtained, and as a result, the processed food with separately packaged broth and sauce had an Fo value as much as 1.7 times higher under the same heating sterilization conditions due to the more rapid temperature increase, compared to the combined retort-sterilized process food. In other words, the processed food with separately packaged broth and sauce can exhibit the same heating sterilization effect with 1.8 times shorter retort heating time than the combined retort-sterilized process food. This confirms that the processed food with separately packaged broth and sauce has an advantage of reduced damage to the ingredients included in the broth caused by high temperature (Table 2 and Fig. 2).

**[Table 2]**

| **Classification (Package)** | **Comparison of F₀ under same retort conditions** | | | **Comparison of retort conditions when reaching same F₀** | | | **Miscellaneous (Notes)** |
|---|---|---|---|---|---|---|---|
| | **Heating sterilization conditions** | **F₀ values** | **Conclusion** | **Heating sterilization conditions** | **F₀ values** | **Conclusion** | |
| Combined pouch (control) | Heating at 90°C for 15 minutes followed by 121.1°C for 10 minutes | **3.36** | | Heating at 90°C for 15 minutes followed by 121.1°C for 18 minutes | **5.76** | | F₀ value: Strength of heat sterilization of microorganisms (F₀=1 at 121.1°C for 1 minute) |
| Separate pouch (present disclosure) | | **5.76** | F₀ value increased 1.7-fold by improved heat transfer rate | Heating at 90°C for 15 minutes followed by 121.1°C for 10 minutes | | F₀ value decreased 1.8-fold by improved heat transfer rate | |

### Experimental Example 2: Measurement of kimchi texture

To specifically measure the enhanced texture of the kimchi stew prepared in Preparation Example 1, the mechanical firmness of the kimchi was measured using a texture analyzer (TA-XTPLUS, Stable micro system Co. Ltd., Surrey, England).

Specifically, the firmness was measured using a 5 mm plunger under the conditions of 2.0 mm/sec pretest speed, 1.0 mm/sec test speed, and 2.0 mm/sec and 20% strain. Each measured value was the result of 20 repeated measurements of the same location, and the accuracy of the experimental data was pursued according to Chauvenet's criterion by having an average value of the measurements excluding an outlier value as a measured value (p < 0.05).

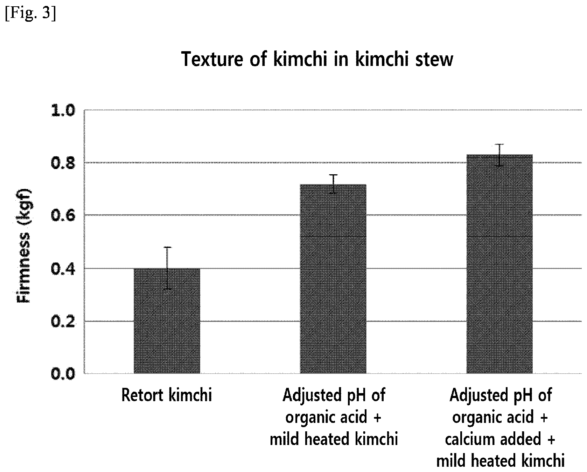

As a result, compared to the firmness (0.4 kgf) of the commercially available retort-sterilized kimchi, that of the kimchi in the kimchi sauce prepared in (3) of the Preparation Example was remarkably enhanced, about twice as high (0.8 kgf). Further, the firmness of the kimchi prepared in (3) of Preparation Example without adding calcium (0.7 kgf) was about twice that of the control, indicating that the texture of kimchi in the kimchi was enhanced by separated sterilization of the sauce and broth (Fig. 3).

### Experimental Example 3: Sensory evaluation of kimchi stew and soybean paste stew having separately packaged sauce and broth

The kimchi stew and soybean paste stew prepared in Preparation Example 1 were compared with the control (combined retort-sterilized product) to measure sensory enhancement.

Specifically, 15 panelists were involved for the sensory evaluation to compare taste quality (such as overall taste, texture of vegetables, appearance (color), *etc*.) of the kimchi stew and soybean paste stew prepared in Preparation Example 1.

As a result, the kimchi stew and soybean paste stew prepared in Preparation Example 1 showed a superior sensory quality, that is, a statistically significant difference of 0.3 to 0.5, compared to the control in terms of overall taste, texture of vegetables, appearance (color), *etc.* (Table 3).

**[Table 3] Result of sensory evaluation**

| Menu | Sample | Preparation and sterilization methods | Overall taste (five point-scale) | Texture of vegetables | Appearance (color) | Storability |
|---|---|---|---|---|---|---|
| Kimchi stew | Control | Retort combined kimchi stew (heating at 121°C for 25 min) | 3.5^{b} | 3.4^{b} | 3.5^{b} | Distributable temperature |
| | Preparation Example 1 | Separate sterilization | 4.0^{a} | 3.9^{a} | 3.8^{a} | Distributable at room temperature |
| Soybean paste stew | Control | Retort combined soybean paste stew (heating at 121°C for 30 min) | 3.4^{b} | 3.4^{b} | 3.4^{b} | Distributable temperature |
| | Preparation Example 1 | Separate sterilization | 3.9^{a} | 3.8^{a} | 3.9^{a} | Distributable at room temperature |

| | | | | | | |
|---|---|---|---|---|---|---|
| * Significant difference verification (*p* < 0.05), no significant difference in regard to the same superscript | | | | | | |

## Claims

1. A processed food distributable at room temperature comprising:
(a) a first food part comprising a paste, a leafy vegetable, or a combination thereof; and
(b) a second food part comprising at least one selected from the group consisting of a meat, a seaweed, a seafood, a root vegetable, a fruit vegetable, and a mushroom,
wherein the first and second food parts are separately packaged.

2. The processed food distributable at room temperature of claim 1, wherein the paste is red pepper paste or soybean paste.

3. The processed food distributable at room temperature of claim 1, wherein the leafy vegetable is at least one selected from the group consisting of Korean cabbage, lettuce, spinach, and water parsley.

4. The processed food distributable at room temperature of claim 1, wherein the first food part comprises kimchi.

5. The processed food distributable at room temperature of claim 1, wherein the meat is at least one selected from the group consisting of beef, cow bone, pork, pig bone, chicken, and chicken bone.

6. The processed food distributable at room temperature of claim 1, wherein the seaweed is at least one selected from the group consisting of laver, sea mustard, kelp, green laver, and hizikia fusiforme.

7. The processed food distributable at room temperature of claim 1, wherein the seafood is at least one selected from the group consisting of anchovy, clam, Manila clam, squid, small octopus, webfoot octopus, mussel, crab, shrimp, oceanic bonito, and freshwater snail.

8. The processed food distributable at room temperature of claim 1, wherein the root vegetable is at least one selected from the group consisting of garlic, ginger, onion, potato, radish, carrot, taro, and burdock.

9. The processed food distributable at room temperature of claim 1, wherein the fruit vegetable is at least one selected from the group consisting of cucumber, pumpkin, red pepper, eggplant, bean, and corn.

10. The processed food distributable at room temperature of claim 1, wherein the fruit vegetable is at least one selected from the group consisting of pumpkin, red pepper, and tofu.

11. The processed food distributable at room temperature of claim 1, wherein a concentration of a microorganism in the processed food distributable at room temperature is less than 10¹ CFU/g 1 month, 2 months, 3 months, 4 months, 5 months, or 6 months after a production date at a temperature of 15°C, 25°C, 35°C, or 45°C.

12. A method for preparing a processed food distributable at room temperature, comprising:
(a) heating a first food product comprising a paste, a leafy vegetable, or a combination thereof at a temperature between 80°C and 110°C; and
(b) heating a second food product comprising water and at least one food selected from the group consisting of a meat, a seaweed, a seafood, a root vegetable, and a tofu at a temperature between 115°C and 123°C.

13. The method of claim 12 for preparing a processed food distributable at room temperature, wherein the heating of (a) further comprises:
(a-1) heating at a temperature between 80°C and 95°C; followed by
(a-2) heating at a temperature between 100°C and 110°C.

14. The method of claim 12 for preparing a processed food distributable at room temperature, wherein the heating of (b) further comprises:
(pre-b) heating at a temperature between 85°C and 95°C before the heating at a temperature between 115°C and 123°C.

15. The method of claim 12 for preparing a processed food distributable at room temperature, wherein the method further comprises:
(a-i) and (b-i) packaging the first and second food parts before or after (a) and (b), respectively.

16. The method of claim 12 for preparing a processed food distributable at room temperature, wherein the preparation method further comprises:
(pre-a) adjusting pH, salinity, or a sugar content of the first food part to 3.9 to 4.5, 3% to 15%, or 20 Brix% to 60 Brix%, respectively, before (a).
